# EUROPEAN PATENT SPECIFICATION

(11) **EP 2 983 986 B1**
(45) Date of publication and mention of the grant of the patent: **06.05.2020**
(21) Application number: 14782143.3
(22) Date of filing: 26.03.2014
(51) Int. Cl.: B64C 27/473, B64C 27/33

(54) **BEARING FOR ROTOR BLADE**
LAGER FÜR EIN ROTORBLATT
PALIER POUR PALE DE ROTOR

(30) Priority: 11.04.2013 US 201313861001
(43) Date of publication of application: 17.02.2016
(73) Proprietor: Sikorsky Aircraft Corporation, Stratford, CT 06615-9129 (US)
(72) Inventor: NUSSENBLATT, Eric Lucien, Stamford, Connecticut 06902 (US); CASEY, Ryan Thomas, San Diego, California 92103 (US); PARSONS, Eric S., New Haven, Connecticut 06511 (US); HUNTER, David H., Cheshire, Connecticut 06410 (US)
(74) Representative: Schmitt-Nilson Schraud Waibel Wohlfrom Patentanwälte Partnerschaft mbB
(86) International application number: PCT/US2014/031816
(87) International publication number: WO 2014/168757

(56) References cited:
- EP-A1- 0 421 631
- WO-A1-95/14608
- US-A- 5 460 487
- US-A1- 2013 064 674
- US-B2- 7 695 249

## Description

### BACKGROUND

The subject matter disclosed herein generally relates to rotors for aircraft use. More specifically, the subject disclosure relates to flexbeam rotors for helicopters or other rotorcraft.

In typical flexbeam helicopter rotors, a flexbeam extends from a rotor hub and is connected to a torque tube and blade via a bolted joint and a snubber type bearing at an inboard end of the torque tube located between the flexbeam and the torque tube. The snubber bearing positions the torque tube relative to the flexbeam for pitch change and flapping motion of the torque tube and react shear loads on the assembly. Such bearings are often elastomeric bearings with preloaded laminates of elastomeric material placed between the flexbeam and torque tube, and are configured such that the elastomer remains in compression throughout the entire load range. Such rotors are subject to vibrational modes during operation, the vibrational frequencies and mode shapes traditionally are tuned to desired placements by changing stiffness and/or mass of the rotor blades, flex beam, and/or torque tube. This method of tuning is not always particularly sensitive.

A rotor blade assembly disclosing the preamble of claim 1 is shown in document EP 0 421 631 A1.

### BRIEF DESCRIPTION

The invention relates in a first aspect to a rotor blade assembly according to claim 1.

In an unclaimed example, a pitch bearing assembly for a blade assembly of a rotary-winged aircraft includes at least two outer bearing members secured to the rotor blade assembly and an inner bearing member located between the at least two outer bearing members to transfer load between the outer bearing members. A stiffness of the inner bearing member is selected to change one or more dynamic characteristics of the rotor blade assembly.

WO 95/14608 A discloses a helicopter rotor that has two or more blades which extend from a hub and has adjustment means for adjusting the lead/lag variations of the blades. One embodiment incorporates an end plate on an upper damper (23) with a lug positioned adjacent to a lug on the torque tube such that the end plate of the damper can be changed relative to the longitudinal axis of the blade. In another embodiment, the damper set includes extended metal shims adjacent to the end most laminate plies of the upper and lower dampers such that these shims can be bolted to the end plates of the snubber assemblies for step increasing the stiffness of the assemblies.

In another embodiment, a rotary-winged aircraft includes an airframe, a drive system, and a rotor assembly operably connected to the drive system. The rotor assembly includes a rotor hub and a plurality of rotor blade assemblies according to claim 1.

In still another embodiment, a method of changing one or more dynamic characteristics of a rotor blade assembly according to claim 10 is disclosed.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic view of an embodiment of a helicopter;
FIG. 2 is a cross-sectional view of an embodiment of a rotor hub and blade assembly;
FIG. 3 is another cross-sectional view of an embodiment of a rotor blade assembly for a helicopter;
FIG. 4 is yet another cross-sectional view of an embodiment of a rotor blade assembly for a helicopter;
FIG. 5 is an illustration of inner bearing member stiffness versus load share between flex beam members and torque tube of a rotor blade assembly; and
FIG.6 is an illustration of vibration response of a rotor blade assembly having differing inner bearing member stiffnesses.

The detailed description explains embodiments of the invention, together with advantages and features, by way of example with reference to the drawings.

### DETAILED DESCRIPTION

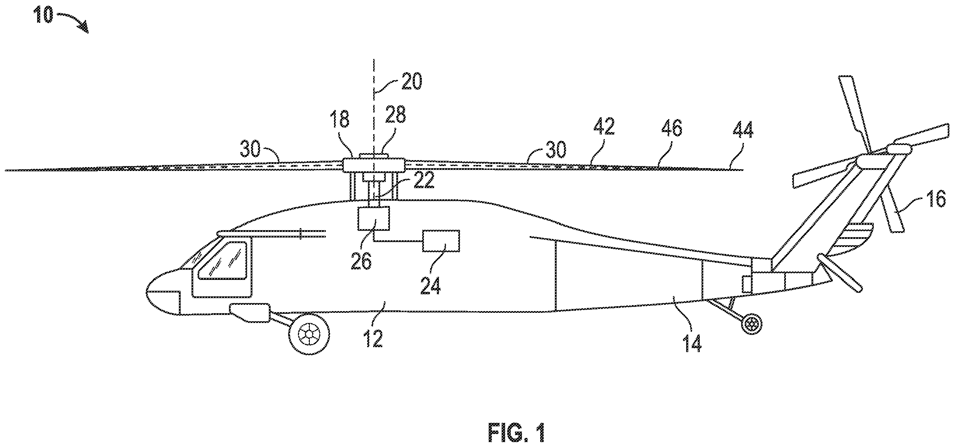

Shown in FIG. 1 is schematic view of an embodiment of a rotary-winged aircraft, in this embodiment a helicopter 10. The helicopter 10 includes an airframe 12 with an extending tail 14 and a tail rotor 16 located thereat. While the embodiment of a helicopter 10 described herein includes an extending tail 14 and tail rotor 16, it is to be appreciated that the disclosure herein may be applied to other types of rotor craft, such as coaxial, dual rotor rotorcraft. A main rotor assembly 18 is located at the airframe 12 and rotates about a main rotor axis 20. The main rotor assembly 18 is driven by a drive shaft 22 connected to a power source, for example, an engine 24 by a gearbox 26.

The main rotor assembly 18 includes a hub member 28 located at the main rotor axis 20 and operably connected to the drive shaft 22. A plurality of blade assemblies 30 are connected to the hub member 28.

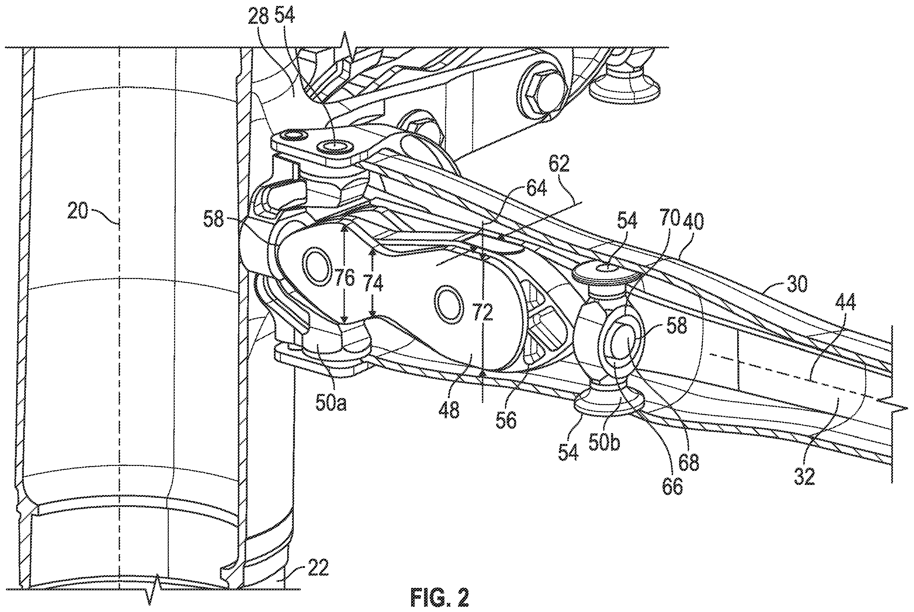

Referring now to FIG. 2, each blade assembly 30 includes at least one flex-beam member 32 secured to the hub member 28 and extending radially outwardly therefrom. A torque tube 40 is positioned around the flex-beam member 32 and extends radially outwardly along the flex-beam member 32. A rotor blade 42 has an airfoil-shaped cross section and is secured to the torque tube 40 and the flex-beam member 32 to extend radially outwardly along a blade axis 44 to a blade tip 46 (shown in FIG. 1). In some embodiments, the torque tube 40 and rotor blade 42 are assembled into a unitary assembly prior to installation over the flex-beam member 32. The torque tube 40 is positioned and supported relative to the flex-beam member 32 by a pitch bearing assembly 48.

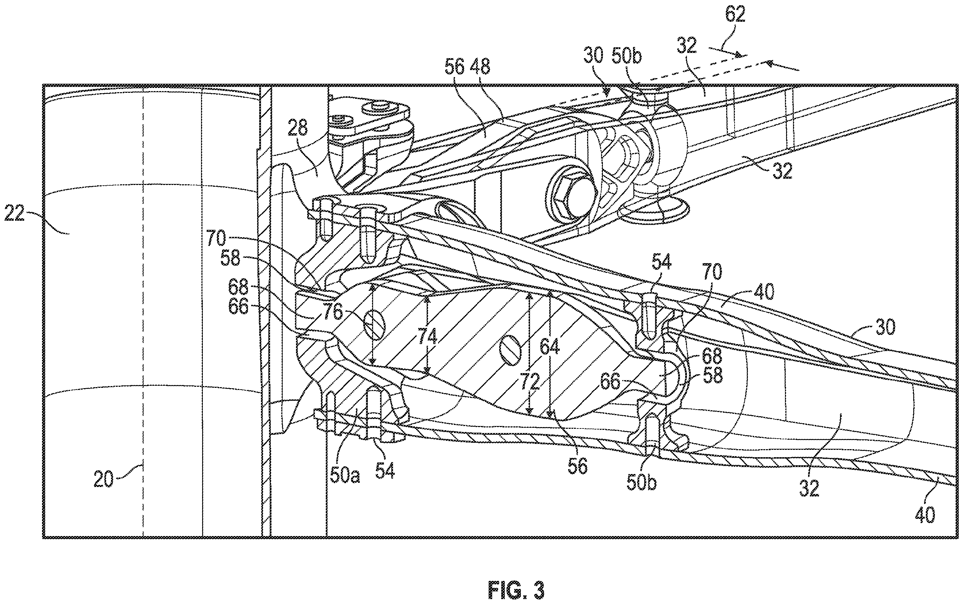

The pitch bearing assembly 48 includes two bearing outer members 50a, 50b positioned within and secured to the torque tube 40, an inboard outer member 50a and an outboard outer member 50b. In some embodiments. The bearing outer members 50a, 50b are secured to the torque tube 40 by one or more bolts (not shown) at bolt openings 54. It is to be appreciated, however, that the bearing outer members 50a, 50b may be secured to the torque tube 40 by other mechanisms and systems. A bearing inner member 56 extends between the two bearing outer members 50a, 50b into bearing races 58 of the bearing outer members 50a, 50b, and is secured to the flex beam 32 at one or more locations. In some embodiments, the bearing inner member 56 includes interface portions 68, which may be cylindrical, extending into the bearing races 58 of each of the bearing outer members 50a, 50b. Inboard of the bearing outer member 50b, a height 64 of the bearing inner member 56 along the main rotor axis 20 increases to a first peak 72. Continuing inboard, the height 64 lessens to a valley 74, then increases again to a second peak 76. Further, the bearing inner member 56 has a lateral thickness 62 which may be constant along a spanwise length of the bearing inner member 56, or which may vary. It is to be appreciated that the bearing inner member 56 shape described herein is merely exemplary and other shapes are contemplated within the scope of the present disclosure. shape described herein The bearing inner member 56 and bearing outer members 50 are typically metallic elements formed from, for example, a titanium, steel or aluminum material. In other embodiments, the bearing outer members 50 and/or the bearing inner member 56 may be formed from a composite material. One or more bearing elements 66 are located between the bearing inner member 56 and the bearing outer member 50, at an inner member interface portion 68, where the bearing inner member 56 extends into a bearing outer member opening 70. In some embodiments, the bearing elements 66 are elastomeric bearing elements 66, formed from an elastic material such as a rubber or other polymeric material, or nonpolymer elastic material, such as a metal, or combinations of polymer and nonpolymer materials, such as an arrangement of layers of elastomeric material metallic shim material therebetween. In other embodiments, the bearing elements 66 are roller or needle elements made of steel, ceramic, etc moving in a circular pattern between the bearing inner member 56 and the bearing outer member 50 at the interface portion 68. In some embodiments, each blade assembly 30 includes two flex-beam members 32. In such embodiments, as best shown in FIG. 3, the bearing inner member 56 is located laterally between the flex beam members 32 of the blade assembly 30.

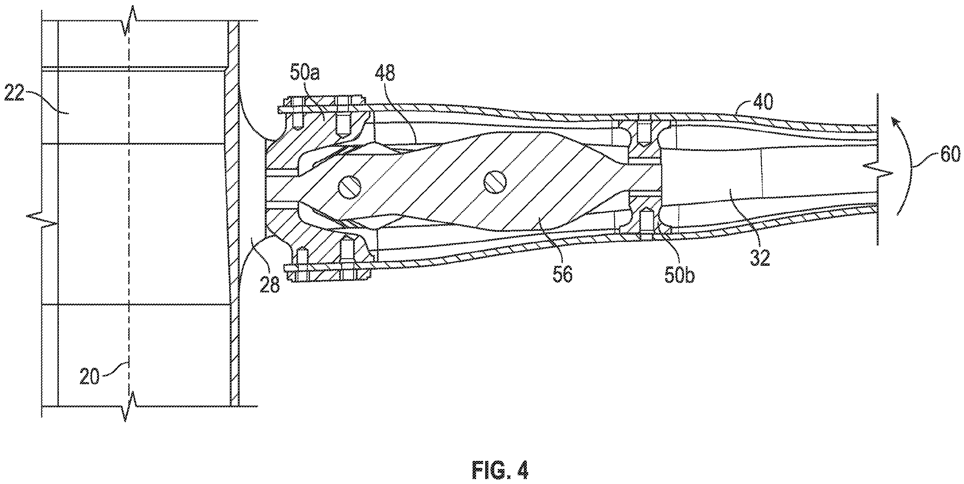

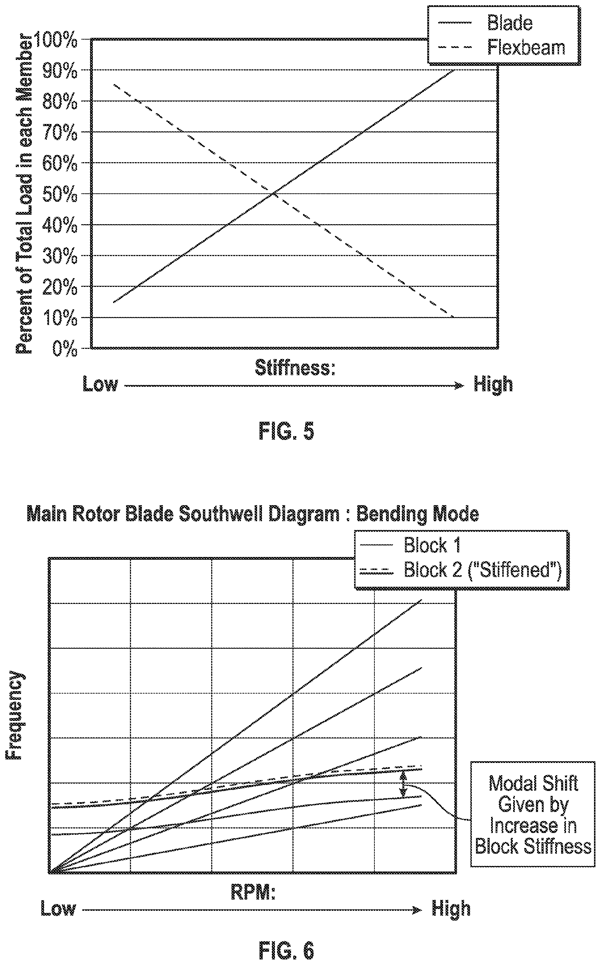

Referring now to FIG. 4, bending loads 60 on the blade assembly 30 are reacted as a couple both in the flex-beam members 32 and in the torque tube 40, since both are coupled to the pitch bearing assembly 48. Stiffness of the bearing inner member 56 determines load share between the torque tube 40 and the flex-beam members 32 and also vibration mode response of the blade assembly 30. Thus, by tuning the stiffness of the bearing inner member 56 a selected load share and vibration mode response can be achieved. For example, through shape change of the inner bearing member 56 and/or material
characteristics of the inner bearing member 56. Referring again to FIG. 3, the shape change, in some embodiments, may include increasing or decreasing the lateral thickness 62 of a portion of the bearing inner member 56 and/or increasing or decreasing the height 64 of a portion of the bearing inner member 56 to change a mass and/or center of gravity of the bearing inner member 56. Further, changes in material characteristics may be accomplished by changing the material of the bearing inner member 56 or using a selected combination of metallic, composite or other materials in the bearing inner member 56 to achieve the selected characteristics. This relationship is illustrated in FIG. 5, which shows that as bearing inner member 56 stiffness increases, bending load reacted by the flex beam members 32 decreases, while bending load reacted by the torque tube 40 increases. Further, as illustrated in FIG. 6, a blade assembly 30 having relatively stiff inner bearing member 56 has an increased bending mode frequency over a blade assembly 30 having a less stiff inner bearing member 56, so it can be concluded that inner bearing member 56 stiffness has an effect on bending mode frequency of the blade assembly 30.

Blade assembly 30 response is highly sensitive to slight modifications to bearing inner member 56 stiffness, as the inner member 56 stiffness is the lowest of all the elements in the assembly. This sensitivity minimizes the need to add more complexity and or weight to the blade assembly 30 structure to achieve a selected load share and/or vibratory response.

According to an embodiment the stiffness of the inner bearing member is selected by changing a shape of the inner bearing member.

According to an embodiment the stiffness of the inner bearing member is selected by changing a material composition of the inner bearing member.

According to an embodiment the inner bearing member is formed from a metallic material. According to an embodiment the flex-beam member comprises two flex-beam members, the pitch bearing assembly disposed between the two flex beam members.

According to an embodiment the pitch bearing assembly is disposed laterally between the two flex beam members.

According to an embodiment the one or more dynamic characteristics include bending load share between the torque tube and the one or more flex beam members or vibratory frequency placement.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, which fall within the scope of the appended claims. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A rotor blade assembly (30) comprising:
at least one flex-beam member (32);
a torque tube (40) surrounding the at least one flex-beam member (32) and extending at least partially along a rotor blade assembly length; and
a pitch bearing assembly (48) supportive of the torque tube (40) relative to the at least one flex-beam member (32) including:
at least two outer bearing members (50a, 50b) secured to the torque tube (40), wherein the at least two outer bearing members include an inboard outer member (50a) and an outboard outer member (50b), the inboard outer member (50a) being disposed inboard of the outboard outer member (50b); **characterized in that** the rotor blade assembly comprises
an inner bearing member (56) extending between the at least two outer bearing members (50a, 50b) and secured to the at least one flex beam member (32) to transfer load between the outer bearing members (50a, 50b);
wherein a stiffness of the inner bearing member (56) is selected such that the stiffness of the inner bearing member (56) determines load share between the torque tube (40) and the at least one flex-beam member (32) and also vibration mode response of the blade assembly (30).

2. The rotor blade assembly of Claim 1, wherein the stiffness of the inner bearing member (56) is selected by changing a shape of the inner bearing member.

3. The rotor blade assembly of Claim 1 or 2, wherein the stiffness of the inner bearing member (56) is selected by changing a material composition of the inner bearing member.

4. The rotor blade assembly of one of Claims 1-3, wherein the inner bearing member (56) is formed from a metallic material.

5. The rotor blade assembly of one of Claims 1-4, wherein the one or more dynamic characteristics include bending load share between components of the rotor blade assembly (30) or vibratory frequency placement.

6. The rotor blade assembly of one of Claims 1 to 5, wherein the at least one flex-beam member comprises two flex-beam members (32), the pitch bearing assembly (48) disposed between the two flex beam members.

7. The rotor blade assembly of Claim 6, wherein the pitch bearing assembly (48) is disposed laterally between the two flex beam members (32).

8. The rotor blade assembly of one of Claims 1-7, wherein the one or more dynamic characteristics include bending load share between the torque tube (40) and the one or more flex-beam members (32) or vibratory frequency placement.

9. A rotary-winged aircraft (10) using the rotor blade assembly (30) of one of Claims 1-8, further comprising:
an airframe (12);
a drive system (22, 24, 26); and
a rotor assembly (18) operably connected to the drive system including:
a rotor hub (28); and
a plurality of the rotor blade assemblies (30) operably connected to the rotor hub (28).

10. A method of changing one or more dynamic characteristics of a rotor blade assembly (30) comprising:
securing at least two pitch bearing outer members (50a, 50b) to a torque tube (40) of a rotor blade assembly (30), wherein the at least two outer bearing members include an inboard outer member (50a) and an outboard outer member (50b), the inboard outer member (50a) being disposed inboard of the outboard outer member (50b);
selecting a stiffness of a pitch bearing inner member (56) to change one or more dynamic characteristics of the rotor blade assembly (30); and
installing the pitch bearing inner member (56) between the at least two pitch bearing outer members (50a, 50b); and
securing the pitch bearing inner member (56) to a flex beam member (32) of the rotor blade assembly (30), surrounded by the torque tube (40).

11. The method of Claim 10, further comprising selecting the stiffness of the pitch bearing inner member (56) by changing a shape of the inner bearing member (56).

12. The method of Claim 10 or 11, further comprising selecting the stiffness of the pitch bearing inner member (56) by changing a material composition of the inner bearing member (56).

13. The method of one of Claims 10-12, wherein the pitch bearing inner member (56) is formed from a metallic material.

14. The method of one of Claims 10-13, wherein the one or more dynamic characteristics include bending load share between the torque tube (40) and the one or more flex-beam members (32) or vibratory frequency placement.

## Patentansprüche

1. Rotorblattbaugruppe (30), umfassend:
mindestens ein flexibles Trägerbauteil (32);
ein Torsionsrohr (40), das das mindestens eine flexible Trägerbauteil (32) umgibt und sich zumindest teilweise entlang einer Länge der Rotorblattbaugruppe erstreckt; und
eine Blattstellungslagerbaugruppe (48), die das Torsionsrohr (40) in Bezug auf das mindestens eine flexible Trägerbauteil (32) lagert, beinhaltend:
mindestens zwei Außenlagerbauteile (50a, 50b), die an dem Torsionsrohr (40) gesichert sind, wobei die mindestens zwei Außenlagerbauteile ein innenliegendes Außenbauteil (50a) und ein außenliegendes Außenbauteil (50b) beinhalten, wobei das innenliegende Außenbauteil (50a) bordseitig von dem außenliegenden Außenbauteil (50b) angeordnet ist; **dadurch gekennzeichnet, dass**
die Rotorblattbaugruppe ein Innenlagerbauteil (56) umfasst, das sich zwischen den mindestens zwei Außenlagerbauteilen (50a, 50b) erstreckt und an dem mindestens einen flexiblen Trägerbauteil (32) gesichert ist, um Last zwischen den Außenlagerbauteilen (50a, 50b) zu übertragen;
wobei eine Steifigkeit des Innenlagerbauteils (56) so ausgewählt ist, dass die Steifigkeit des Innenlagerbauteils (56) eine Lastenteilung zwischen dem Torsionsrohr (40) und dem mindestens einen flexiblen Trägerbauteil (32) und auch eine Vibrationsmodusreaktion der Blattbaugruppe (30) bestimmt.

2. Rotorblattbaugruppe nach Anspruch 1, wobei die Steifigkeit des Innenlagerbauteils (56) durch Verändern einer Form des Innenlagerbauteils ausgewählt wird.

3. Rotorblattbaugruppe nach Anspruch 1 oder 2, wobei die Steifigkeit des Innenlagerbauteils (56) durch Verändern einer Materialzusammensetzung des Innenlagerbauteils ausgewählt wird.

4. Rotorblattbaugruppe nach einem der Ansprüche 1-3, wobei das Innenlagerbauteil (56) aus einem Metallmaterial gebildet ist.

5. Rotorblattbaugruppe nach einem der Ansprüche 1-4, wobei die eine oder mehreren dynamischen Eigenschaften eine Biegelastenteilung zwischen Komponenten der Rotorblattbaugruppe (30) oder eine Schwingungsfrequenzeinstellung beinhalten.

6. Rotorblattbaugruppe nach einem der Ansprüche 1 bis 5, wobei das mindestens eine flexible Trägerbauteil zwei flexible Trägerbauteile (32) umfasst, wobei die Blattstellungslagerbaugruppe (48) zwischen den zwei flexiblen Trägerbauteilen angeordnet ist.

7. Rotorblattbaugruppe nach Anspruch 6, wobei die Blattstellungslagerbaugruppe (48) seitlich zwischen den zwei flexiblen Trägerbauteilen (32) angeordnet ist.

8. Rotorblattbaugruppe nach einem der Ansprüche 1-7, wobei die eine oder mehreren dynamischen Eigenschaften eine Biegelastenverteilung zwischen dem Torsionsrohr (40) und dem einen oder den mehreren flexiblen Trägerbauteilen (32) oder eine Schwingungsfrequenzeinstellung beinhalten.

9. Drehflügel-Luftfahrzeug (10), das die Rotorblattbaugruppe (30) nach einem der Ansprüche 1-8 verwendet, ferner umfassend:
ein Flugwerk (12);
ein Antriebssystem (22, 24, 26); und
eine Rotorbaugruppe (18), die mit dem Antriebssystem wirkverbunden ist, beinhaltend:
eine Rotornabe (28); und
eine Vielzahl von Rotorblattbaugruppen (30), die mit der Rotornabe (28) wirkverbunden ist.

10. Verfahren zum Verändern einer oder mehrerer dynamischer Eigenschaften einer Rotorblattbaugruppe (30), umfassend:
Sichern von mindestens zwei Blattstellungslager-Außenbauteilen (50a, 50b) an einem Torsionsrohr (40) einer Rotorblattbaugruppe (30), wobei die mindestens zwei Außenlagerbauteile ein innenliegendes Außenbauteil (50a) und ein außenliegendes Außenbauteil (50b) beinhalten, wobei das innenliegende Außenbauteil (50a) bordseitig von dem außenliegenden Außenbauteil (50b) angeordnet ist;
Auswählen einer Steifigkeit eines Blattstellungslager-Innenbauteils (56), um eine oder mehrere dynamische Eigenschaften der Rotorblattbaugruppe (30) zu verändern; und
Einbauen des Blattstellungslager-Innenbauteils (56) zwischen den mindestens zwei Blattstellungslager-Außenbauteilen (50a, 50b); und
Sichern des Blattstellungslager-Innenbauteils (56) an einem flexiblen Trägerbauteil (32) der Rotorblattbaugruppe (30), das durch das Torsionsrohr (40) umgeben ist.

11. Verfahren nach Anspruch 10, ferner umfassend Auswählen der Steifigkeit des Blattstellungslager-Innenbauteils (56) durch Verändern einer Form des Innenlagerbauteils (56).

12. Verfahren nach Anspruch 10 oder 11, ferner umfassend Auswählen der Steifigkeit des Blattstellungslager-Innenbauteils (56) durch Verändern einer Materialzusammensetzung des Innenlagerbauteils (56).

13. Verfahren nach einem der Ansprüche 10-12, wobei das Blattstellungslager-Innenbauteil (56) aus einem Metallmaterial gebildet ist.

14. Verfahren nach einem der Ansprüche 10-13, wobei die eine oder mehreren dynamischen Eigenschaften eine Biegelastenteilung zwischen dem Torsionsrohr (40) und dem einen oder den mehreren flexiblen Trägerbauteilen (32) oder eine Schwingungsfrequenzeinstellung beinhalten.

## Revendications

1. Ensemble pale de rotor (30) comprenant :
au moins un élément de poutre flexible (32) ;
un tube de torsion (40) entourant l'au moins un élément de poutre flexible (32) et s'étendant au moins partiellement le long d'une longueur d'ensemble pale de rotor ; et
un ensemble palier de pas (48) supportant le tube de torsion (40) par rapport à l'au moins un élément de poutre flexible (32) comportant :
au moins deux éléments de palier externes (50a, 50b) fixés au tube de torsion (40), dans lequel les au moins deux éléments de palier externes comportent un élément externe intérieur (50a) et un élément externe extérieur (50b), l'élément externe intérieur (50a) étant disposé à l'intérieur de l'élément externe extérieur (50b) ; **caractérisé en ce que** l'ensemble pale de rotor comprend
un élément de palier interne (56) s'étendant entre les au moins deux éléments de palier externes (50a, 50b) et fixé à l'au moins un élément de poutre flexible (32) pour transférer la charge entre les éléments de palier externes (50a, 50b) ;
dans lequel une rigidité de l'élément de palier interne (56) est sélectionnée de sorte que la rigidité de l'élément de palier interne (56) détermine la répartition de la charge entre le tube de torsion (40) et l'au moins un élément de poutre flexible (32) ainsi qu'une réponse au mode vibratoire de l'ensemble pale (30).

2. Ensemble pale de rotor selon la revendication 1, dans lequel la rigidité de l'élément de palier interne (56) est sélectionnée en modifiant une forme de l'élément de palier interne.

3. Ensemble pale de rotor selon la revendication 1 ou 2, dans lequel la rigidité de l'élément de palier interne (56) est sélectionnée en modifiant une composition de matériau de l'élément de palier interne.

4. Ensemble pale de rotor selon l'une des revendications 1 à 3, dans lequel l'élément de palier interne (56) est formé d'un matériau métallique.

5. Ensemble pale de rotor selon l'une des revendications 1 à 4, dans lequel les une ou plusieurs caractéristiques dynamiques comportent une répartition de la charge de flexion entre les composants de l'ensemble pale de rotor (30) ou un placement de fréquence vibratoire.

6. Ensemble pale de rotor selon l'une des revendications 1 à 5, dans lequel l'au moins un élément de poutre flexible comprend deux éléments de poutre flexible (32), l'ensemble palier de pas (48) étant disposé entre les deux éléments de poutre flexible.

7. Ensemble pale de rotor selon la revendication 6, dans lequel l'ensemble palier de pas (48) est disposé latéralement entre les deux éléments de poutre flexible (32).

8. Ensemble pale de rotor selon l'une des revendications 1 à 7, dans lequel les une ou plusieurs caractéristiques dynamiques comportent la répartition de la charge de flexion entre le tube de torsion (40) et les un ou plusieurs éléments de poutre flexible (32) ou le placement de fréquence vibratoire.

9. Aéronef à voilure tournante (10) utilisant l'ensemble pale de rotor (30) selon l'une des revendications 1 à 8, comprenant en outre :
une cellule (12) ;
un système d'entraînement (22, 24, 26) ; et
un ensemble rotor (18) relié de manière fonctionnelle au système d'entraînement comportant :
un moyeu de rotor (28) ; et
une pluralité d'ensembles pales de rotor (30) reliés de manière fonctionnelle au moyeu de rotor (28).

10. Procédé de modification d'une ou de plusieurs caractéristiques dynamiques d'un ensemble pale de rotor (30) comprenant :
la fixation d'au moins deux éléments externes de palier de pas (50a, 50b) à un tube de torsion (40) d'un ensemble pale de rotor (30), dans lequel les au moins deux éléments de palier externes comportent un élément externe intérieur (50a) et un élément externe extérieur (50b), l'élément externe intérieur (50a) étant disposé à l'intérieur de l'élément externe extérieur (50b) ;
la sélection d'une rigidité d'un élément interne de palier de pas (56) pour modifier une ou plusieurs caractéristiques dynamiques de l'ensemble pale de rotor (30) ; et
l'installation de l'élément interne de palier de pas (56) entre les au moins deux éléments externes de palier de pas (50a, 50b) ; et
la fixation de l'élément interne de palier de pas (56) à un élément de poutre flexible (32) de l'ensemble pale de rotor (30), entouré par le tube de torsion (40).

11. Procédé selon la revendication 10, comprenant en outre la sélection de la rigidité de l'élément interne de palier de pas (56) en modifiant une forme de l'élément de palier interne (56).

12. Procédé selon la revendication 10 ou 11, comprenant en outre la sélection de la rigidité de l'élément interne de palier de pas (56) en modifiant une composition de matériau de l'élément de palier interne (56).

13. Procédé selon l'une des revendications 10 à 12, dans lequel l'élément interne de palier de pas (56) est formé d'un matériau métallique.

14. Procédé selon l'une des revendications 10 à 13, dans lequel les une ou plusieurs caractéristiques dynamiques comportent la répartition de la charge de flexion entre le tube de torsion (40) et les un ou plusieurs éléments de poutre flexible (32) ou le placement de fréquence vibratoire.
